# EUROPEAN PATENT APPLICATION

(11) **EP 4 700 917 A1**
(43) Date of publication of application: **25.02.2026**
(21) Application number: 24897962.7
(22) Date of filing: 14.11.2024
(51) Int. Cl.: H01M 10/6568, H01M 10/613, H01M 10/625, H01M 10/6551

(54) **BATTERY PACK AND VEHICLE COMPRISING SAME**

(30) Priority: 29.11.2023 KR 20230169533
(71) Applicant: LG Energy Solution, Ltd., Seoul 07335 (KR)
(72) Inventor: KIM, Kyungwoo, Daejeon 34122 (KR); BAEK, Yunseon, Daejeon 34122 (KR); YUN, Hyeonki, Daejeon 34122 (KR)
(74) Representative: Plasseraud IP
(86) International application number: PCT/KR2024/017971
(87) International publication number: WO 2025/116366

(57) **Abstract**

A battery pack according to the present invention comprises: a plurality of battery modules; a battery pack case for accommodating the plurality of battery modules; and a heat sink provided between the battery modules and the battery pack case, wherein the heat sink includes: a plurality of heat exchange flow paths on which heat is exchanged with each of the plurality of battery modules at positions corresponding to each of the plurality of battery modules; a connection flow path for connecting the plurality of heat exchange flow paths; a main inlet port and a main outlet port through which a fluid is supplied to the plurality of heat exchange flow paths; and an auxiliary inlet port and an auxiliary outlet port through which a fluid is supplied to each of the plurality of heat exchange flow paths.

## Description

### Technical Field

The present disclosure relates to a battery pack and a vehicle comprising the same.

### Background Art

Secondary batteries may be charged and discharged, and thus, are widely utilized in mobile devices such as a digital camera, a mobile phone, and a laptop, and in particular, are recently gaining attention as an energy source of an electric vehicle, an energy storage system (ESS), or the like. Meanwhile, as the electric vehicle or the ESS demands high-capacity and high-output power, medium and large battery devices are widely utilized, such as a battery module in which multiple secondary batteries are accommodated within a housing or a battery pack equipped with multiple battery modules.

Since it is desirable that the medium and large battery devices are manufactured with small size and weight if possible, a prismatic battery cell, a pouch-type battery cell, and the like that may be accumulated with high density and have a low weight relative to capacity are mainly used as a battery cell (unit cell). In particular, the pouch-type battery cell using an aluminum laminate sheet or the like as an exterior member has gained much attention recently due to advantages such as low weight, low manufacturing costs, and easy shape change.

Meanwhile, these medium and large battery devices may generate a large amount of heat in charging and discharging processes and thus includes a heat sink configured to discharge heat from the inside of devices.

However, the heat sink capable of only collectively cooling or heating all of a plurality of modules or cells mounted has difficulty in that partial cooling or heating may not be implemented when needed.

### Summary

### Technical Goals

The present disclosure is conceived based on the problem described above and intended to provide a battery pack configured for each section of the battery pack to be cooled or heated.

### Technical solutions

A battery pack according to an example aspect of the present disclosure includes a plurality of battery modules, a battery pack case configured to accommodate the plurality of battery modules, and a heat sink provided between the battery modules and the battery pack case, and the heat sink includes a plurality of heat exchange flow paths configured to heat-exchange with each of the plurality of battery modules at a position corresponding to each of the plurality of battery modules, a connection flow path configured to connect the plurality of heat exchange flow paths, a main inlet port and a main outlet port configured for a fluid to be supplied to the plurality of heat exchange flow paths, and an auxiliary inlet port and an auxiliary outlet port configured for a fluid to be supplied to each of the plurality of heat exchange flow paths.

The heat sink may further include a flow rate regulating part configured to block a connection to the connection flow path so that a fluid supplied by the auxiliary inlet port circulates within a corresponding heat exchange flow path.

The flow rate regulating part may be configured to control a fluid flow by regulating a size of a cross-section perpendicular to a fluid movement direction of the heat exchange flow path.

The flow rate regulating part may include a fixing screw configured to be movable in a direction perpendicular to the fluid movement direction of the heat exchange flow path and a boss part configured to be engaged with the fixing screw.

The connection flow path may include a first connection flow path configured to transfer a fluid entering from the main inlet port to the plurality of heat exchange flow paths and a second connection flow path configured to transfer a fluid whose heat exchange is finished in the plurality of heat exchange flow paths to the main outlet port.

Each of the plurality of heat exchange flow paths may include an inlet flow path connected to the first connection flow path, an outlet flow path connected to the second connection flow path, and an intermediate flow path configured to connect the inlet flow path and the outlet flow path.

The flow rate regulating part may include a first flow rate regulating part configured to block a connection to the first connection flow path and a second flow rate regulating part configured to block a connection to the second connection flow path.

The heat sink may include a first heat exchange flow path and a second heat exchange flow path adjacent to each other among the plurality of heat exchange flow paths and may be configured for a fluid entering from the auxiliary inlet port of the first heat exchange flow path to prevent flow into the second heat exchange flow path and while directing the flow to the auxiliary outlet port of the first heat exchange flow path, both occurring when an inflow and an outflow of the fluid are blocked by the first flow rate regulating part and the second flow rate regulating part corresponding to the first heat exchange flow path.

The battery pack may be provided with an adhesive member between the heat sink and the plurality of battery modules.

The adhesive member may include a thermally conductive member.

A vehicle according to an example aspect of the present disclosure may include the battery pack according to the present disclosure.

### Advantageous Effects

According to an aspect of the present disclosure, it is possible for a fluid to rapidly flow into and flow out of a heat exchange flow path corresponding to a predetermined battery module. Using an auxiliary inlet port and an auxiliary outlet port, it is possible for the fluid to directly flow into and flow out of the heat exchange flow path corresponding to the predetermined battery module, thereby reducing time.

Further, when a connection flow path is configured for a plurality of heat exchange flow paths to be connected in parallel, a rapid heat exchange between a heat sink and battery modules may be possible. Since an existing heat exchange flow path is formed of a single path without branching of the flow path, there are problems in that, when a battery pack is large, it takes much time for a fluid to circulate throughout and cooling performance is relatively low in a module positioned at a rear end. However, according to the present disclosure, a fluid entering along a main inlet port divides into a plurality of branches from a first connection flow path and the fluid is transferred to each of a plurality of heat exchange flow paths in parallel, thereby achieving rapid heat exchange and uniform cooling performance.

According to another aspect of the present disclosure, it is possible to exchange heat between a heat sink and battery modules more efficiently. When a rapid heat exchange is required for a predetermined battery module, using a first flow rate regulating part and a second flow rate regulating part corresponding to a heat exchange flow path corresponding to another battery module, a flow of a fluid to the heat exchange flow path may be blocked, thus moving the fluid only through a heat exchange flow path corresponding to the predetermined battery module. Further, when a heat exchange is not required for the predetermined battery module, using a similar manner to the above, it is possible to move a fluid only through the heat exchange flow path corresponding to another battery module.

According to yet another aspect, it is possible to easily regulate a flow rate. A fixing screw may operate in a manual manner through the manipulation of an operator and also automatically operate by electric signals as being connected to an actuator. In addition, the fixing screw may operate continuously in order to have any state from a completely blocked state to a completely opened state of a cross-section approximately perpendicular to a movement direction of a heat exchange flow path, and thus, a rapid response based on a required degree and a position of heat exchange may be possible.

### Brief Description of Drawings

FIG. 1 is an exploded perspective view of a battery pack according to an example aspect of the present disclosure.
FIG. 2 is a combined perspective view of a battery pack according to an example aspect of the present disclosure.
FIG. 3 is a partial cross-sectional view taken along A-A' indicated in FIG. 2.
FIG. 4 is a diagram showing a heat sink according to an example aspect of the present disclosure.
FIG. 5 is an enlarged view of a portion indicated in FIG. 4.
FIG. 6 is a cross-sectional view of a portion indicated in FIG. 5.
FIG. 7 is a bottom perspective view of a portion indicated in FIG. 5.
FIG. 8 is an enlarged view of a portion of a heat sink included in a battery pack according to an example aspect of the present disclosure.
FIG. 9 is a diagram showing a replacement process of a battery module included in a battery pack according to an example aspect of the present disclosure.
FIGS. 10 to 13 are diagrams showing a first flow rate regulating part before and after operation included in a battery pack according to an example aspect of the present disclosure.
FIG. 14 is a diagram showing a vehicle according to an example aspect of the present disclosure.

### Detailed Description

Before the present disclosure is described, terms or words used in the present disclosure and the accompanying claims are not to be limited to general definitions or dictionary definitions. The terms and words are to be construed under a principle that an inventor may appropriately define a concept of a term in order to describe their disclosure in the best way. Thus, since example aspects described in the present disclosure and configurations illustrated in the accompanying drawings are merely most desirable example aspects and do not represent all of the technical spirit of the present disclosure, it should be understood that various equivalents and modifications that may replace the example aspects and configurations may be present at the time of filing the application of the present disclosure.

The same reference numerals or symbols illustrated in the accompanying drawings represent components or elements performing substantially identical functions. For convenience for description and understanding, example aspects different from each other may be described with the same reference numerals or symbols. In other words, although a plurality of drawings illustrates elements having the same reference numeral, the plurality of drawings does not mean only one example aspect.

In the following descriptions, terms in a singular form include terms in a plural form unless an apparently and contextually conflicting description is present. Terms such as "including" or "comprising" is to indicate that a feature, a number, an operation, an action, an element, a component, or a combination thereof is present. It should be understood that the terms are not to exclude in advance a possibility that one or more other features, numbers, operations, actions, elements, components, or combinations thereof may be present or added.

In addition, it should be noted in advance that an expression such as an upper side, an upper portion, a lower side, a lower portion, a side surface, a front surface, or a rear surface is based on directions illustrated in the drawings and that the expression may be changed when a direction of a corresponding object is changed.

Terms including an ordinal number such as "first" or "second" used in the present specification and claims may be used to distinguish elements. Such an ordinal number is used to contextually distinguish identical or similar elements from each other. Meanings of the terms may not be limited by use of the ordinal number. For example, a use order, a disposition order, or the like of elements with such an ordinal number may not be limitedly construed by the number. As required, ordinal numbers may be substituted with each other.

Hereinafter, the example aspects of the present disclosure will be described with reference to the accompanying drawings. However, the idea of the present disclosure is not limited to the proposed example aspects. For example, those skilled in the art who understand the idea of the present disclosure may propose another example aspect included in the scope of the idea of the present disclosure through addition, change, removal, or the like of an element. However, the other example aspect is also included in the scope of the idea of the present disclosure. Shapes, sizes, or the like of elements in the drawings may be exaggerated for clearer description.

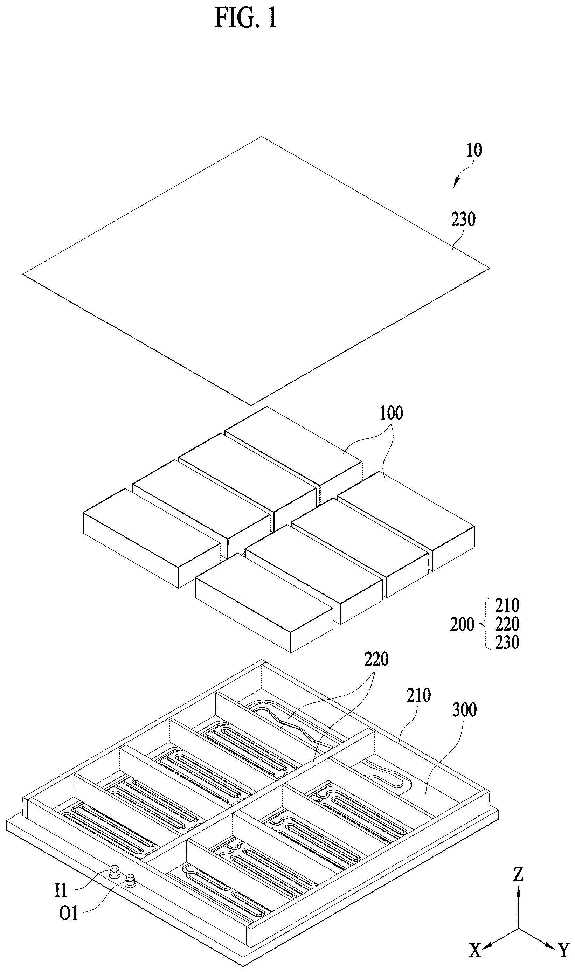

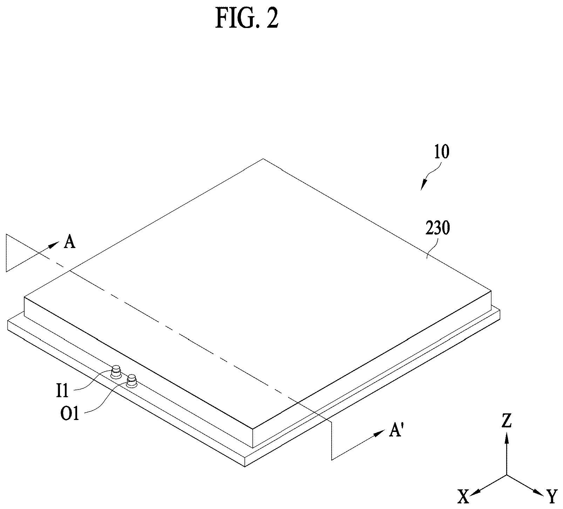

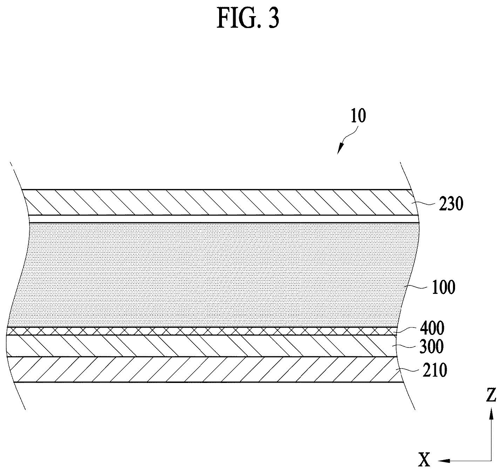

FIG. 1 is an exploded perspective view of a battery pack according to an example aspect of the present disclosure. FIG. 2 is a combined perspective view of a battery pack according to an example aspect of the present disclosure. FIG. 3 is a partial cross-sectional view taken along A-A' indicated in FIG. 2.

Referring to FIGS. 1 to 3, a battery pack 10 according to the present disclosure may include a battery module 100, a pack case 200, and a heat sink 300.

The battery module 100 may include a plurality of battery cells. The plurality of battery cells may be a pouch-type battery cell. The pouch-type battery cell may include an electrode assembly, an electrolyte, and a pouch exterior material. A plurality of pouch-type battery cells may be stacked in at least one direction to constitute the battery module 100. The plurality of pouch-type battery cells may be disposed to be stacked in an X-axis direction.

The battery module 100 may not include a module case. In other words, the battery pack 10 may not be provided with a separate module case to implement the battery pack 10 of a cell-to-pack (CTP) type using the pouch-type battery cell. Therefore, the battery module 100 according to the present disclosure may refer to a bundle of a plurality of pouch-type cells stacked in one direction.

In some cases, the battery module 100 may include a cell cover for at least partially surrounding an exterior of the plurality of battery cells stacked.

In addition, features of the present disclosure may also be applied identically to a case where the battery module 100 includes a module case.

The pack case 200 may accommodate a plurality of battery modules 100. The pack case 200 may form a space inside to accommodate the plurality of battery modules 100. For example, the pack case 200 may be provided with a case body 210, a partition wall 220, and a pack cover 230. The case body 210 may be configured in the form of a box with an upper end opened and may accommodate the plurality of battery modules 100 in an internal space. The partition wall 220 may partition the internal space of the case body 210. The partition wall 220 may be provided in a space corresponding to a space between the plurality of battery modules 100 adjacent to each other. The pack cover 230 may be configured in the form of a cover for covering an open part (the open part positioned in a positive Z-axis direction) of the upper end of the case body 210. Meanwhile, the pack case 200 is not limited to the structure illustrated and described herein, and for example, the case body 210 may be composed of a bottom plate, an end plate, a front plate, and a side plate.

The heat sink 300 may be provided between the battery modules 100 and the pack case 200. The heat sink 300 may be configured to perform heat exchange with the battery module 100 based on a coolant flowing therewithin. For example, the coolant may flow into the heat sink 300 in a cooled state from outside, and in a process of flowing through a predetermined flow path provided therewithin, may increase in temperature by heat conducted from the battery module 100 and be discharged back to outside. This coolant may be cooled outside again and flow into the heat sink 300 and may heat-exchange with the battery module 100 while flowing through the predetermined flow path provided therewithin, then be discharged, having a circulation structure.

Referring again to FIG. 3, the battery pack 10 may be provided with an adhesive member 400.

The adhesive member 400 may be provided between the heat sink 300 and the plurality of battery modules 100. The adhesive member 400 may be provided between the heat sink 300 and the pack case 200. The adhesive member 400 may be a urethane-based heat dissipation adhesive.

The adhesive member 400 may include a thermally conductive member. The thermally conductive member may be a thermal interface material (TIM). The heat generated in the battery module 100 may undergo heat exchange through the adhesive member 400 and the heat sink 300, then be released.

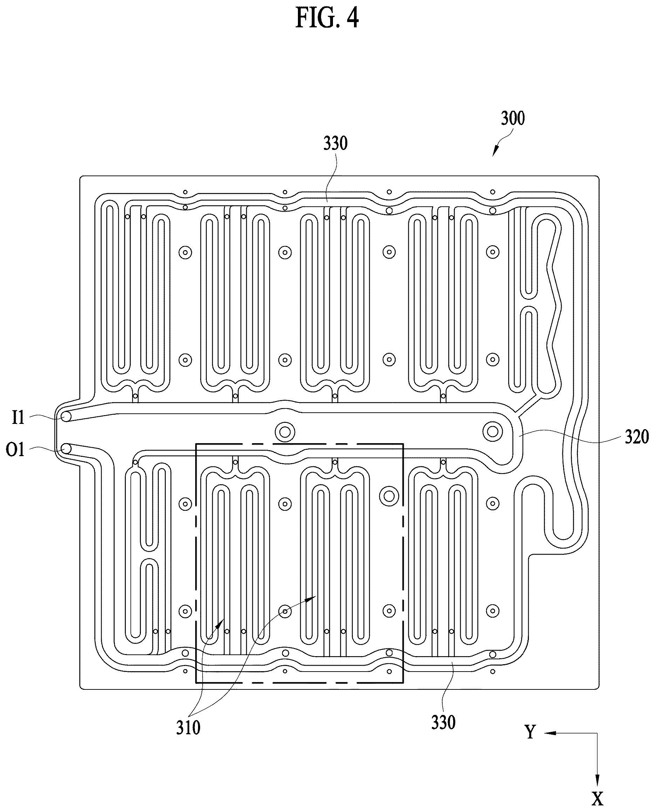

Hereinafter, a more detailed structure of the heat sink 300 is described through FIGS. 4 to 13.

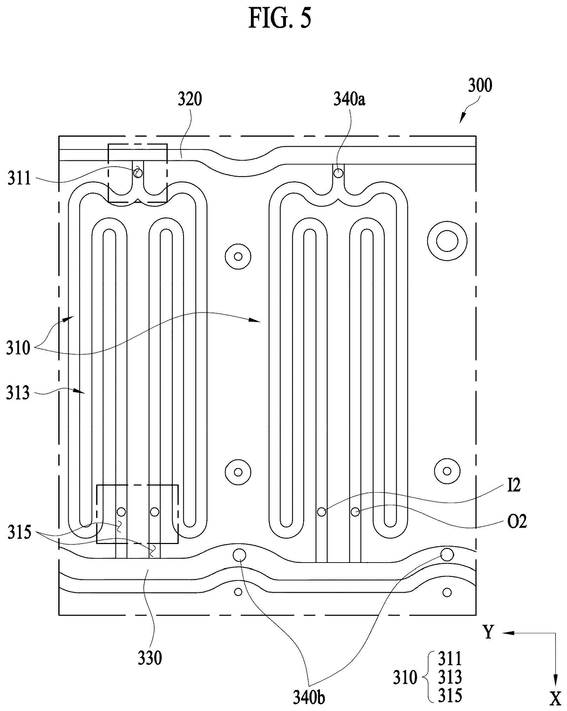

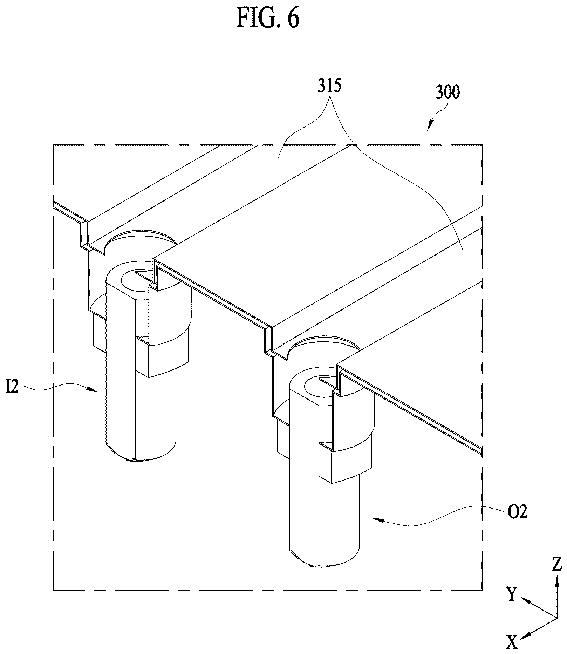

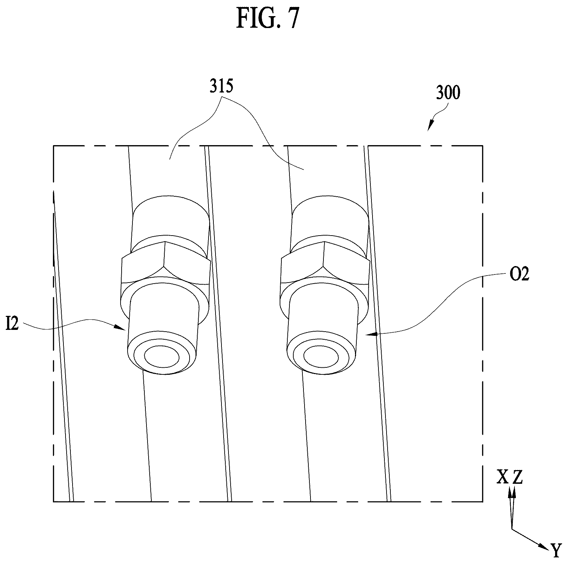

FIG. 4 is a diagram showing a heat sink according to an example aspect of the present disclosure. FIG. 5 is an enlarged view of a portion indicated in FIG. 4. FIG. 6 is a cross-sectional view of a portion indicated in FIG. 5. FIG. 7 is a bottom perspective view of a portion indicated in FIG. 5.

Referring to FIGS. 4 to 7, the heat sink 300 may include a main inlet port I1, a main outlet port O1, a plurality of heat exchange flow paths 310, connection flow paths 320, 330, an auxiliary inlet port I2, and an auxiliary outlet port O2.

The main inlet port I1 may be configured for a fluid to enter from the outside of the battery pack 10 to the inside of the battery pack 10. The fluid may enter from the outside of the battery pack 10 to the inside of the battery pack 10 through a fluid supply device connected to the main inlet port I1. The fluid supply device may cause the fluid to enter at a constant pressure or a preset pressure.

The main outlet port O1 may be configured for a fluid to exit from the inside of the battery pack 10 to the outside of the battery pack 10. The fluid may exit from the inside of the battery pack 10 to the outside of the battery pack 10 through a fluid recovery device connected to the main outlet port O1. The fluid recovery device may recover the fluid at a constant pressure or a preset pressure.

The main inlet port I1 and the main outlet port O1 may include a ball valve. The main inlet port I1 and the main outlet port O1 may include a check valve. In addition, the auxiliary inlet port I2 and the auxiliary outlet port O2 to be described below may also include the ball valve or the check valve. However, the main inlet port I1, the main outlet port O1, the auxiliary inlet port I2, and the auxiliary outlet port O2 are not limited to including only the ball valve or the check valve.

The plurality of heat exchange flow paths 310 may be in communication with the main inlet port I1 and the main outlet port O1. Each of the plurality of heat exchange flow paths 310 may be provided at a position corresponding to each of the plurality of battery modules 100. The plurality of heat exchange flow paths 310 may be configured to heat-exchange with each of the battery modules 100.

The connection flow paths 320, 330 may connect the plurality of heat exchange flow paths 310. The connection flow paths 320, 330 may include a first connection flow path 320 and a second connection flow path 330. However, the connection flow paths 320, 330 may be not only configured to connect the plurality of heat exchange flow paths 310 in parallel as illustrated in FIG. 4 but also may include being configured to connect the plurality of heat exchange flow paths 310 in series or being configured to connect the plurality of heat exchange flow paths 310 in various connection manners including both parallel connection and serial connection.

The first connection flow path 320 may be configured to transfer a fluid entering from the main inlet port I1 to the plurality of heat exchange flow paths 310. The first connection flow path 320 may be in direct communication with the main inlet port I1. The first connection flow path 320 may be in direct communication with each of the plurality of heat exchange flow paths 310. The fluid entering from the main inlet port I1 may be transferred to each of the plurality of heat exchange flow paths 310 as flowing along the first connection flow path 320 formed clockwise from the main inlet port I1 approximately inside the heat sink 300.

The second connection flow path 330 may be configured to transfer a fluid whose heat exchange is finished in the plurality of heat exchange flow paths 310 to the main outlet port O1. The second connection flow path 330 may be in direct communication with the main outlet port O1. The second connection flow path 330 may be in direct communication with each of the plurality of heat exchange flow paths 310. The fluid whose heat exchange is finished in the plurality of heat exchange flow paths 310 may be transferred to the main outlet port O1 as flowing clockwise along the second connection flow path 330.

In other words, a fluid entering through the main inlet port I1 may be transferred to each of the plurality of heat exchange flow paths 310 through the first connection flow path 320. The fluid transferred to each of the plurality of heat exchange flow paths 310 may heat-exchange with each of the plurality of battery modules 100 as flowing along each of the plurality of heat exchange flow paths 310. The fluid whose heat exchange with each of the plurality of battery modules 100 is finished may flow to the second connection flow path 330. The fluid flowing to the second connection flow path 330 may exit through the main outlet port O1.

The auxiliary inlet ports I2 and the auxiliary outlet ports O2 may be provided corresponding to each of the plurality of heat exchange flow paths 310. Each of the auxiliary inlet port I2 and the auxiliary outlet port O2 may be configured for a fluid to be supplied to each heat exchange flow path 310 or for the fluid to exit from each heat exchange flow path 310. The auxiliary inlet port I2 may be configured to allow the fluid to flow into the heat exchange flow path 310 from the outside of the battery pack 10. The auxiliary outlet port O2 may be configured to allow the fluid to flow out of the heat exchange flow path 310 to the outside of the battery pack 10.

Meanwhile, the auxiliary inlet port I2 and the auxiliary outlet port O2 may also be provided at a position opposite to that of the drawings.

Alternatively, the auxiliary inlet port I2 and the auxiliary outlet port O2 may also perform opposite functions in contrast to each designation. This presumes a case where the auxiliary inlet port I2 and the auxiliary outlet port O2 are configured with an identical physical structure.

As described above, the auxiliary inlet ports I2 and the auxiliary outlet ports O2 may include the ball valve or the check valve.

According to this configuration of the present disclosure, a fluid may rapidly flow into and flow out of the heat exchange flow path 310 corresponding to a predetermined battery module 100. Using the auxiliary inlet port I2 and the auxiliary outlet port O2, the fluid may directly flow into and flow out of the heat exchange flow path 310 corresponding to the predetermined battery module 100, thereby reducing time.

In addition, when the connection flow paths 320, 330 are configured to connect the plurality of heat exchange flow paths 310 in parallel, a rapid heat exchange between the heat sink 300 and the battery modules 100 may be performed. Since an existing heat exchange flow path is formed of a single path without branching of the flow path, there are problems in that, when the battery pack 10 is large, it takes much time for a fluid to circulate throughout and cooling performance is relatively low in a module positioned at a rear end. However, according to the present disclosure, a fluid entering along the main inlet port I1 divides into a plurality of branches from the first connection flow path 320 and the fluid is transferred to each of the plurality of heat exchange flow paths 310 in parallel, thereby achieving rapid heat exchange and uniform cooling performance.

Referring to FIG. 5, each of the plurality of heat exchange flow paths 310 may include an inlet flow path 311, an outlet flow path 315, and an intermediate flow path 313.

The inlet flow path 311 may be connected to the first connection flow path 320. One inlet flow path 311 may be formed.

The outlet flow path 315 may be connected to the second connection flow path 330. Two outlet flow paths 315 may be formed.

The intermediate flow path 313 may connect the inlet flow path 311 and the outlet flow path 315. The intermediate flow path 313 may be formed long in a zig-zag pattern so that time for heat exchange with the battery module 100 is sufficient.

However, the numbers and positions of the inlet flow path 311 and the outlet flow path 315 in the present disclosure are not limited to the above. For example, two inlet flow paths 311 and two outlet flow paths 315 may be formed and the inlet flow paths 311 may be connected to the outlet flow paths 315 through the independent intermediate flow path 313, or two outlet flow paths 315, when connected to the second connection flow path 330, may be combined into one, similarly to the inlet flow path 311, and connected.

Referring again to FIG. 5, the heat sink 300 may include flow rate regulating parts 340a, 340b.

The flow rate regulating parts 340a, 340b may be configured to block connections to the connection flow paths 320, 330 so that a fluid supplied by the auxiliary inlet port I2 circulates within the heat exchange flow path 310 corresponding to the corresponding auxiliary inlet port I2.

The flow rate regulating parts 340a, 340b may include a first flow rate regulating part 340a and a second flow rate regulating part 340b.

The first flow rate regulating part 340a may be configured to block a connection of the heat exchange flow path 310 to the first connection flow path 320. The first flow rate regulating part 340a may be configured to selectively control a flow of a fluid entering from the first connection flow path 320 to the heat exchange flow path 310. The first flow rate regulating part 340a may be provided in the inlet flow path 311. The first flow rate regulating part 340a may be provided in the first connection flow path 320. The number of the first flow rate regulating part 340a may be identical to the number of the heat exchange flow path 310.

The second flow rate regulating part 340b may be configured to block a connection of the heat exchange flow path 310 to the second connection flow path 330. The second flow rate regulating part 340b may be configured to selectively control a flow of a fluid exiting from the heat exchange flow path 310 to the second connection flow path 330. The second flow rate regulating part 340b may be provided in the second connection flow path 330. The number of the second flow rate regulating part 340b may be identical to the number of the heat exchange flow path 310.

However, the numbers and positions of the first flow rate regulating part 340a and the second flow rate regulating part 340b are not limited to FIG. 5. For example, the first flow rate regulating part 340a may be provided not in the inlet flow path 311 but in the first connection flow path 320, and the second flow rate regulating part 340b may also be provided not in the second connection flow path 330 but in each outlet flow path 315.

According to this configuration of the present disclosure, heat exchange between the heat sink 300 and the battery modules 100 may be performed more efficiently. When a rapid heat exchange is required for a predetermined battery module 100, using the first flow rate regulating part 340a and the second flow rate regulating part 340b corresponding to a heat exchange flow path 310 corresponding to another battery module 100, a flow of a fluid to the heat exchange flow path 310 may be blocked, thus moving the fluid only through a heat exchange flow path 310 corresponding to the predetermined battery module 100. Further, when a heat exchange is not required for the predetermined battery module 100, using a similar manner to the above, a fluid may move only through the heat exchange flow path 310 corresponding to another battery module 100.

In particular, this manner may be used to weaken adhesive strength of the adhesive member 400. In a process of using the battery pack 10, a case may occur, where an issue arises only with a specific battery module 100 and the corresponding battery module 100 alone is required to be replaced or inspected. In this case, only the specific battery module 100 with the issue needs to be separated. In a process of separating the specific battery module 100, the battery module 100 may be damaged due to excessive adhesive strength of the adhesive member 400 or the separating process may not be easy. In particular, when the battery module 100 is formed without a separate module frame for the CTP type, a problem of damaging the battery module 100 occurs more frequently in the process of separating the battery module 100.

The adhesive strength of the adhesive member 400 may decrease at a predetermined temperature or above. Therefore, a fluid is allowed to flow only to the heat exchange flow path 310 corresponding to the specific battery module 100 requiring separation through the manner as above, and by entering a fluid of the predetermined temperature or above through an inlet port, the adhesive strength of the adhesive member 400 may be weakened and the specific battery module 100 may be easily separated. The predetermined temperature may be about 50 degrees Celsius (°C) and may be an appropriate temperature to easily separate the battery module 100 while preventing damage to cells.

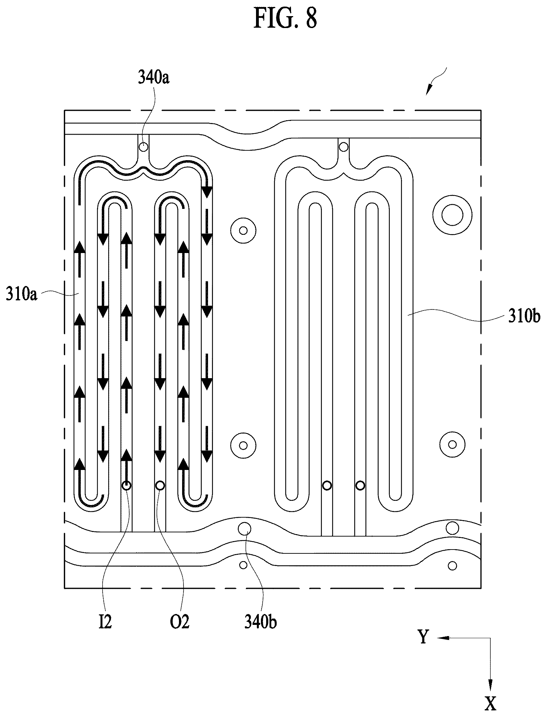

FIG. 8 is an enlarged view of a portion of the heat sink 300 included in the battery pack 10 according to an example aspect of the present disclosure.

Referring to FIG. 8, the heat sink 300 may include a first heat exchange flow path 310a and a second heat exchange flow path 310b adjacent to each other among the plurality of heat exchange flow paths 310. The first heat exchange flow path 310a and the second heat exchange flow path 310b may be adjacent to each other along a Y-axis direction. However, the first heat exchange flow path 310a and the second heat exchange flow path 310b are to describe the plurality of heat exchange flow paths 310 adjacent to each other, and the number of the heat exchange flow paths 310 is not limited as two.

The heat sink 300 may be configured for a fluid entering from the auxiliary inlet port I2 of the first heat exchange flow path 310a to prevent flow into the second heat exchange flow path 310b while directing the flow the auxiliary outlet port O2 of the first heat exchange flow path 310a, both occurring when an inflow and an outflow of the fluid are blocked by the first flow rate regulating part 340a and the second flow rate regulating part 340b corresponding to the first heat exchange flow path 310a. Referring to FIG. 8, in a state where the inflow and the outflow of the fluid are blocked by the first flow rate regulating part 340a and the second flow rate regulating part 340b, the fluid, when flowing into the auxiliary inlet port I2, moves along the heat exchange flow path 310. The fluid may not move to the first connection flow path 320 during a moving process since the first flow rate regulating part 340a is blocked and exit to the auxiliary outlet port O2. In addition, a portion of the fluid may flow backward again to the auxiliary outlet port O2 since the second flow rate regulating part 340b is blocked and exit even when not exiting to the auxiliary outlet port O2.

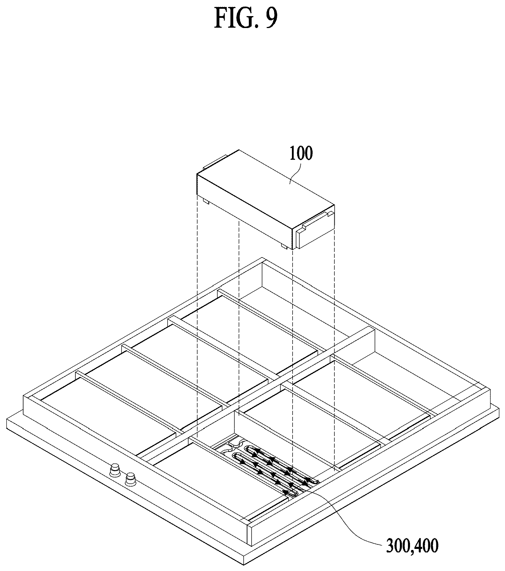

A replacement process of the battery module 100 using the auxiliary inlet port I2 and the auxiliary outlet port O2 is described in more detail with reference to FIG. 9.

FIG. 9 is a diagram showing a replacement process of the battery module 100 included in the battery pack 10 according to an example aspect of the present disclosure.

In the replacement process of the battery module 100, the adhesive strength of the adhesive member 400 needs to be decreased. To decrease the adhesive strength of the adhesive member 400, a fluid at a predetermined temperature or above needs to flow into and out of the heat exchange flow path 310 corresponding to a predetermined battery module 100, but if the auxiliary inlet port I2 and the auxiliary outlet port O2 are not used and the main inlet port I1 and the main outlet port O1 are used, a high-temperature fluid flows throughout the first connection flow path 320 and the second connection flow path 330. In this case, as an area of the battery module 100 requiring no removal is also heated due to the high-temperature fluid, the battery module 100 may have a problem of degraded bonding force or separating, and using the auxiliary inlet port I2 and the auxiliary outlet port O2 prevents this problem.

For example, in a general driving state of a vehicle, in other words, in a situation where cooling the battery pack 10 is required, a vehicle radiator hose may be connected to the main inlet port I1 and the main outlet port O1 and a coolant for cooling may be supplied, and in a situation where replacing the predetermined battery module 100 is required, the vehicle radiator hose may be connected to the auxiliary inlet port I2 and the auxiliary outlet port O2 and a coolant for heating may be supplied. In this case, the coolant for cooling and the coolant for heating may be an identical material but may be supplied with temperatures of the coolants regulated to be different.

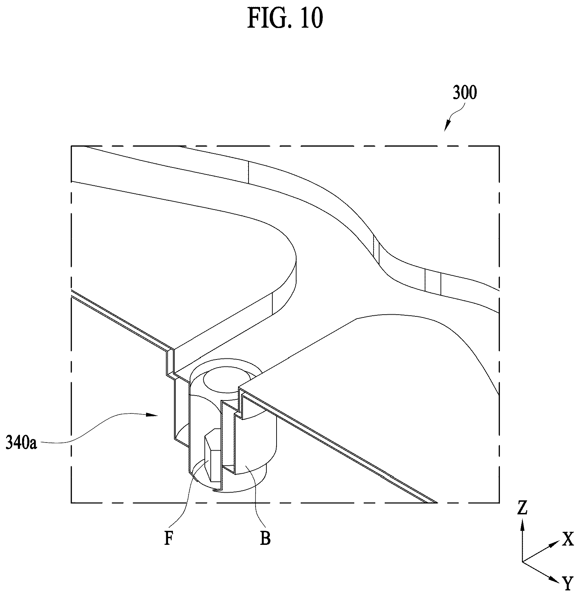

Hereinafter, a manner of flow rate regulating operation of the first flow rate regulating part 340a and the second flow rate regulating part 340b is described with reference to FIGS. 10 to 13. FIGS. 10 to 13 are diagrams showing the first flow rate regulating part 340a before and after operation included in the battery pack 10 according to an example aspect of the present disclosure.

The first flow rate regulating part 340a before and after operation is only illustrated in FIGS. 10 to 13, but the second flow rate regulating part 340b may also operate similarly thereto.

The first flow rate regulating part 340a and the second flow rate regulating part 340b may be configured to control a fluid flow by regulating a size of a cross-section approximately perpendicular to a fluid movement direction of the heat exchange flow path 310. The first flow rate regulating part 340a and the second flow rate regulating part 340b may be configured to control a fluid flow by regulating a width with respect to a height direction of the heat exchange flow path 310.

The first flow rate regulating part 340a and the second flow rate regulating part 340b may include a fixing screw F and a boss part B. The fixing screw F may move in a direction approximately perpendicular to the fluid movement direction of the heat exchange flow path 310. The fixing screw F may move along the height direction of the heat exchange flow path 310. The boss part B may be configured for the fixing screw F to be engaged from below. A thread corresponding to the fixing screw F may be provided on an inner surface of the boss part B for stable coupling of the fixing screw F. The fixing screw F may be engaged with the boss part B from below.

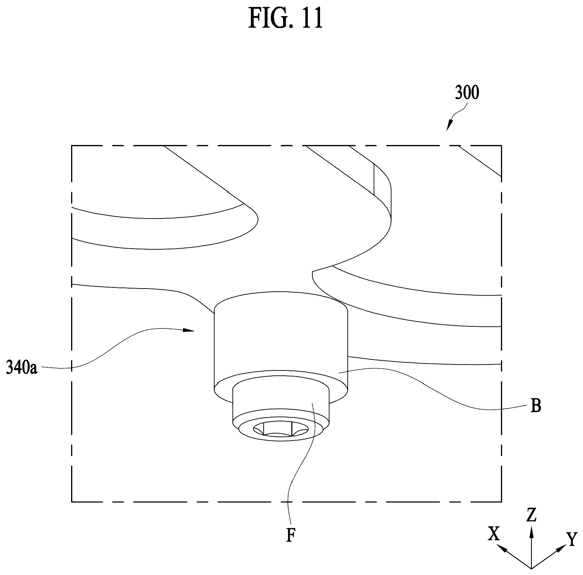

FIGS. 10 and 11 illustrate the first flow rate regulating part 340a when regulating a flow rate is not required. The fixing screw F is engaged with the boss part B but does not move in the height direction, and thus, the cross-section approximately perpendicular to the fluid movement direction of the heat exchange flow path 310 is in a completely opened state.

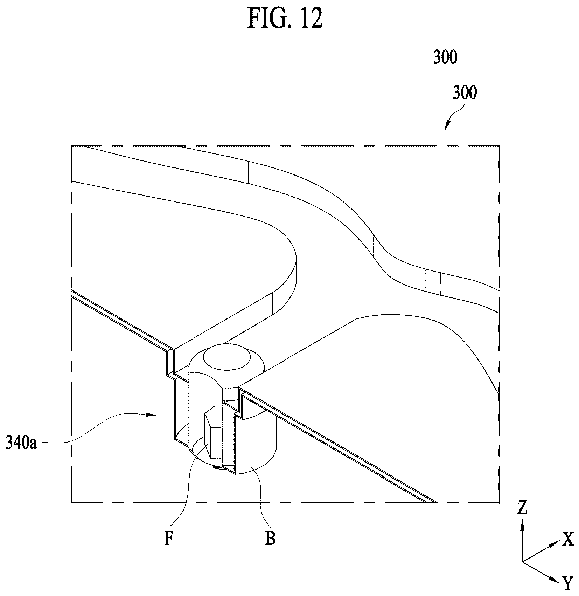

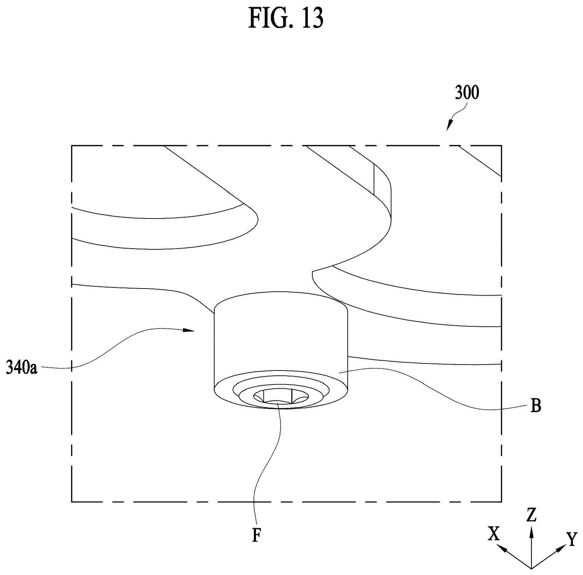

FIGS. 12 and 13 illustrate the first flow rate regulating part 340a when regulating a flow rate is required. The fixing screw F is engaged with the boss part B and moves in the height direction, and thus, it may be shown that the size of the cross-section approximately perpendicular to the fluid movement direction of the heat exchange flow path 310 decreases. The fixing screw F may operate continuously in order to have any state from a completely opened state to a completely blocked state of the cross-section approximately perpendicular to the fluid movement direction of the heat exchange flow path 310.

According to this configuration of the present disclosure, a flow rate may be easily regulated. The fixing screw F may operate in a manual manner through the manipulation of an operator and also automatically operate by electric signals as being connected to an actuator. In addition, the fixing screw F may operate continuously in order to have any state from a completely blocked state to a completely opened state of a cross-section approximately perpendicular to a fluid movement direction of the heat exchange flow path 310, and thus, a rapid response based on a required degree and a position of heat exchange may be possible.

Although not illustrated in the drawings, the battery pack 10 according to the present disclosure described above may further include other various components, for example, components of the battery pack 10 known on the filing date of the present disclosure, such as a battery management system (BMS), a relay, and a current sensor, in addition to the battery module 100.

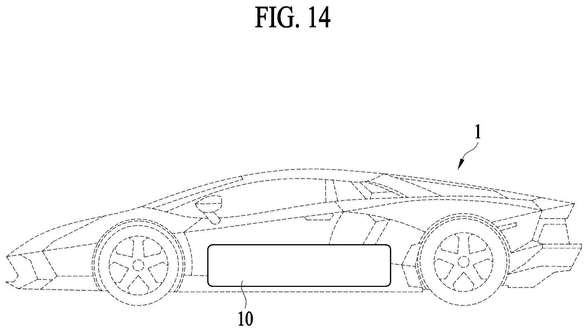

FIG. 14 is a diagram showing a vehicle 1 according to an example aspect of the present disclosure.

Referring to FIG. 14, the vehicle 1 according to the present disclosure may include the battery pack 10 according to the present disclosure. The vehicle 1 may further include other various components included in the vehicle 1 in addition to the battery pack 10. For example, the vehicle 1 according to the present disclosure may further include a vehicle body, a motor, a control device such as an electronic control unit (ECU), or the like, in addition to the battery pack 10 according to the present disclosure.

As above, while the present disclosure is described with a focus on the preferred example aspects with reference to the accompanying drawings, it is apparent that those skilled in the art may make multiple various obvious modifications from these descriptions without departing from the scope of the present disclosure. Therefore, the scope of the present disclosure should be construed by the claims described to include these many modification examples.

### [Description of symbols]

1 Vehicle
10 Battery pack
100 Battery module
200 Pack case
210 Case body
220 Partition wall
230 Pack cover
300 Heat sink
I1 Main inlet por
O1 Main outlet port
310 Plurality of heat exchange flow paths
311 Inlet flow path
315 Outlet flow path
313 Intermediate flow path
320 First connection flow path
330 Second connection flow path
340a First flow rate regulating part
340b Second flow rate regulating part
B Boss part
F Fixing screw
I2 Auxiliary inlet port
O2 Auxiliary outlet port
310a First heat exchange flow path
310b Second heat exchange flow path
400 Adhesive member

## Claims

1. A battery pack comprising:
a plurality of battery modules;
a battery pack case configured to accommodate the plurality of battery modules; and
a heat sink provided between the battery modules and the battery pack case,
wherein the heat sink comprises:
a plurality of heat exchange flow paths configured to heat-exchange with each of the plurality of battery modules at a position corresponding to each of the plurality of battery modules;
a connection flow path configured to connect the plurality of heat exchange flow paths;
a main inlet port and a main outlet port configured for a fluid to be supplied to the plurality of heat exchange flow paths; and
an auxiliary inlet port and an auxiliary outlet port configured for a fluid to be supplied to each of the plurality of heat exchange flow paths.

2. The battery pack of claim 1,
wherein the heat sink
further comprises a flow rate regulating part configured to block a connection to the connection flow path so that a fluid supplied by the auxiliary inlet port circulates within a corresponding heat exchange flow path.

3. The battery pack of claim 2,
wherein the flow rate regulating part
is configured to control a fluid flow by regulating a size of a cross-section perpendicular to a fluid movement direction of the heat exchange flow path.

4. The battery pack of claim 3,
wherein the flow rate regulating part
includes a fixing screw configured to be movable in a direction perpendicular to the fluid movement direction of the heat exchange flow path and a boss part configured to be engaged with the fixing screw.

5. The battery pack of claim 2,
wherein the connection flow path includes:
a first connection flow path configured to transfer a fluid entering from the main inlet port to the plurality of heat exchange flow paths; and
a second connection flow path configured to transfer a fluid whose heat exchange is finished in the plurality of heat exchange flow paths to the main outlet port.

6. The battery pack of claim 5,
wherein each of the plurality of heat exchange flow paths includes:
an inlet flow path connected to the first connection flow path;
an outlet flow path connected to the second connection flow path; and
an intermediate flow path configured to connect the inlet flow path and the outlet flow path.

7. The battery pack of claim 6,
wherein the flow rate regulating part includes:
a first flow rate regulating part configured to block a connection to the first connection flow path; and
a second flow rate regulating part configured to block a connection to the second connection flow path.

8. The battery pack of claim 7,
wherein the heat sink
includes a first heat exchange flow path and a second heat exchange flow path adjacent to each other among the plurality of heat exchange flow paths andis configured for a fluid entering from the auxiliary inlet port of the first heat exchange flow path to prevent flow into the second heat exchange flow path while directing the flow to the auxiliary outlet port of the first heat exchange flow path, both occurring when an inflow and an outflow of the fluid are blocked by the first flow rate regulating part and the second flow rate regulating part corresponding to the first heat exchange flow path.

9. The battery pack of claim 1,
wherein the battery pack
is provided with an adhesive member between the heat sink and the plurality of battery modules.

10. The battery pack of claim 9,
wherein the adhesive member
includes a thermally conductive member.

11. A vehicle comprising the battery pack according to any one of claims 1 to 10.
